# FASCICULE DE BREVET EUROPEEN

(11) **EP 3 543 056 B1**
(45) Date de publication et mention de la délivrance du brevet: **30.09.2020**
(21) Numéro de dépôt: 19167756.6
(22) Date de dépôt: 18.01.2016
(51) Int. Cl.: B60K 15/035, F16K 31/22, F16K 24/04, B60K 15/03, B64D 37/02, B64D 37/32

(54) **RESERVOIR DE CARBURANT ANTI-SURPRESSION**
KRAFTSTOFFTANK MIT ÜBERDRUCKSICHERUNG
ANTI-OVERPRESSURE FUEL TANK

(30) Priorité: 05.02.2015 FR 1550916
(43) Date de publication de la demande: 25.09.2019
(62) Demande divisionnaire de: 16703581.5
(73) Titulaire: Zodiac Aerotechnics, 42230 Roche La Moliere (FR)
(72) Inventeur: EPALLE, Patrick, 42400 SAINT-CHAMOND (FR); VACHER, Michel, 42230 ROCHE LA MOLIERE (FR)
(74) Mandataire: Cabinet Laurent & Charras

(56) Documents cités:
- EP-A1- 2 532 590
- WO-A1-89/11446
- WO-A2-02/12009
- CH-A- 396 770
- DE-A1- 2 047 815
- FR-A1- 2 327 469
- FR-A2- 2 299 264
- US-A- 2 845 937

## Description

### DOMAINE TECHNIQUE

La présente invention concerne le domaine technique des réservoirs de carburant, d'un aéronef par exemple, et concerne plus particulièrement un réservoir de carburant équipé d'un système de mise à l'air pour l'équilibrage entre la pression interne du réservoir et la pression atmosphérique, en fonction de la consommation de carburant, afin d'éviter toute surpression à l'intérieur dudit réservoir.

L'invention trouve notamment une application avantageuse dans un réservoir de carburant assujetti à un système d'inertage par injection de gaz inerte.

### ART ANTERIEUR

Il est connu de l'état de la technique un réservoir de carburant, d'un aéronef par exemple, équipé d'un système de mise à l'air du type comprenant un clapet de fermeture d'une ouverture vers l'extérieur ménagée dans le réservoir. Le clapet est notamment assujetti à un flotteur, et est monté de manière articulée dans le réservoir de sorte à adopter une position fermée, poussé par le flotteur lorsque le niveau de carburant dans le réservoir atteint un certain seuil, et une position ouverte de mise à l'air, entrainé par le flotteur lorsque le niveau de carburant est en dessous dudit seuil. Un tel système est divulgué dans US2845937, WO0212009 par exemple.

En d'autres termes, lors de la phase de remplissage du réservoir de carburant, le clapet à flotteur reste ouvert jusqu'à ce que le niveau de carburant qui augmente pousse le flotteur et entraine le clapet à obturer l'ouverture du réservoir, permettant d'éviter au carburant d'être évacué du réservoir par ladite ouverture. Ensuite, en phase de vol, et plus particulièrement en phase de consommation de carburant, le niveau de carburant diminue de sorte que le flotteur entraine, par effet gravitaire, l'ouverture du clapet qui adopte la position ouverte de mise à l'air et permet, par une admission d'air extérieur, l'équilibrage entre la pression interne du réservoir et la pression atmosphérique.

Cependant, ce type de réservoir équipé d'un système de mise à l'air présente certains inconvénients inhérents à sa structure.

En effet, les mouvements du carburant à l'intérieur du réservoir, par exemple lors du tangage ou du roulis d'un aéronef comprenant un tel réservoir, peuvent entrainer, par action sur le flotteur, une fermeture non désirée du clapet. Ceci présente notamment un inconvénient majeur lorsque ledit réservoir est assujetti à un système d'inertage par injection de gaz inerte. En effet, dans le domaine de l'aéronautique, et afin de répondre aux nouvelles exigences en matière de sécurité des aéronefs, et plus particulièrement pour éviter les risques d'inflammabilité du mélange air et vapeur de carburant présent les réservoirs, ceux-ci sont assujettis à des systèmes d'inertage, actifs sous certaines conditions, telles que par exemple lorsque la teneur en oxygène dans ledit réservoir dépasse un certain seuil. Ainsi, l'injection de gaz inerte alors que le clapet est involontairement fermé provoque la mise en pression du réservoir, laquelle pression maintient le clapet en position fermée, même lorsque le carburant n'exerce plus de contrainte sur le flotteur.

Il en résulte que la fonction mise à l'air du réservoir n'est plus assurée et que la pression augmente à l'intérieur du réservoir, ce qui peut entrainer des conséquences désastreuses.

### EXPOSE DE L'INVENTION

L'un des buts de l'invention est donc de remédier à ces inconvénients en proposant un réservoir de carburant équipé d'un système de mise à l'air, qui soit sécurisé et qui permette d'assurer, d'une manière optimale et en toute circonstance, la fonction de mise à l'air dudit réservoir, afin d'éviter toute surpression à l'intérieur dudit réservoir.

A cet effet, il a été mis au point un réservoir de carburant comprenant un système de mise à l'air comprenant un clapet de fermeture d'une ouverture ménagée dans le réservoir. Le clapet est assujetti à un flotteur et est monté de manière articulée dans le réservoir de sorte à adopter une position fermée, poussé par le flotteur lorsque le niveau de carburant dans le réservoir atteint un certain seuil, et une position ouverte de mise à l'air, entrainé par le flotteur lorsque le niveau de carburant est en dessous dudit seuil.

Le clapet comprend une soupape pilotée par des moyens aptes à ouvrir la soupape lorsque le clapet est en position fermée alors que le niveau de carburant est en dessous dudit seuil, afin d'éviter une surpression à l'intérieur dudit réservoir.

De cette manière, lorsque le clapet est, d'une manière non désirée, maintenu en position fermée par la force exercée par la pression interne, la fonction de mise à l'air du réservoir est assurée par la soupape. Ainsi, le réservoir selon l'invention est sécurisé.

Selon une première forme de réalisation du réservoir ne faisant pas partie de l'invention, la soupape présente une forme de tige montée coulissante dans un orifice du clapet, entre une position d'ouverture et de fermeture de l'orifice. La tige comprend une première extrémité avec un épaulement destiné à faire office de butée pour la position de fermeture de la tige, et une deuxième extrémité avec un épaulement formant un siège pour un ressort de compression agencé autour de la tige et en contre-appui contre le clapet pour maintenir la tige en position fermée. Ainsi, lorsque la force exercée par la pression interne sur la soupape dépasse la somme des forces exercées sur la soupape par la pression atmosphérique et par le ressort, ladite soupape est poussée en position ouverte, à l'encontre dudit ressort, et assure une mise à l'air du réservoir de carburant afin d'éviter une surpression à l'intérieur dudit réservoir.

Selon une deuxième forme de réalisation du réservoir selon l'invention, la soupape est assujettie à un deuxième flotteur monté de manière articulée dans le réservoir de sorte que ladite soupape adopte une position fermée, en étant poussée par le deuxième flotteur lorsque le niveau de carburant dans le réservoir atteint un certain seuil, et une position ouverte de mise à l'air afin d'éviter une surpression à l'intérieur dudit réservoir, en étant entrainée par le deuxième flotteur lorsque le niveau de carburant est en dessous dudit seuil et que la force exercée par la pression interne sur la soupape est inférieure à la somme des forces exercées sur la soupape par la pression atmosphérique et par le poids du deuxième flotteur.

Avantageusement, dans cette forme de réalisation, le deuxième flotteur est assujetti à la soupape par l'intermédiaire d'un bras formant un bras de levier pour augmenter la force exercée par le deuxième flotteur sur la soupape.

### DESCRIPTION SOMMAIRE DES FIGURES

D'autres avantages et caractéristiques ressortiront mieux de la description qui va suivre, de plusieurs variantes d'exécution, données à titre d'exemples non limitatifs, du réservoir de carburant suivant l'invention, à partir des dessins annexés sur lesquels :
- la figure 1 est une représentation schématique illustrant un premier mode de réalisation ne faisant pas partie de l'invention, la soupape étant pilotée par un ressort,
- la figure 2 est une représentation schématique illustrant un second mode de réalisation de l'invention, la soupape étant pilotée par un deuxième flotteur.

### DESCRIPTION DETAILLEE DE L'INVENTION

L'invention concerne un réservoir (1), destiné à recevoir du carburant, et équipé d'un système de mise à l'air (2) pour équilibrer la pression interne du réservoir (1) avec la pression atmosphérique et éviter toute surpression à l'intérieur dudit réservoir.

L'invention concerne un réservoir (1) de tout type d'aéronef, civil ou militaire, tels qu'un avion ou un hélicoptère par exemple.

D'une manière connue, le réservoir (1) comprend une ouverture (3) assurant une communication avec l'extérieur dudit réservoir (1) pour la mise à l'air en tant que telle. Le système de mise à l'air (2) du réservoir (1) comprend un clapet (4) de fermeture, monté de manière pivotante par rapport au réservoir (1) et autour d'un axe (5) pour adopter une position fermée dans laquelle il obture l'ouverture (3) du réservoir (1) et une position ouverte de mise à l'air dans laquelle il libère ladite ouverture (3).

Le clapet (4) est prolongé en partie inférieure par un bras (6) terminé par un flotteur (7). Lorsque le clapet (4) est en position fermée, le bras (6) se trouve agencé sensiblement horizontalement et à proximité de l'ouverture (3) de sorte que lorsque le réservoir (1) est plein, l'action du carburant sur le flotteur (7) maintient en position fermée le clapet (4) pour éviter toute fuite de carburant par l'ouverture (3) de mise à l'air.

Lorsque le niveau de carburant diminue, le flotteur (7) descend avec le niveau du carburant et entraine le pivotement et l'ouverture du clapet (4) autour de l'axe (5) pour la mise à l'air du réservoir (1).

Selon l'invention, le clapet (4) comprend une soupape (8) sous la forme d'une tige (8a) destinée à assurer la mise à l'air du réservoir (1) lorsque le clapet (4) est en position fermée et que le niveau de carburant est en dessous du seuil.

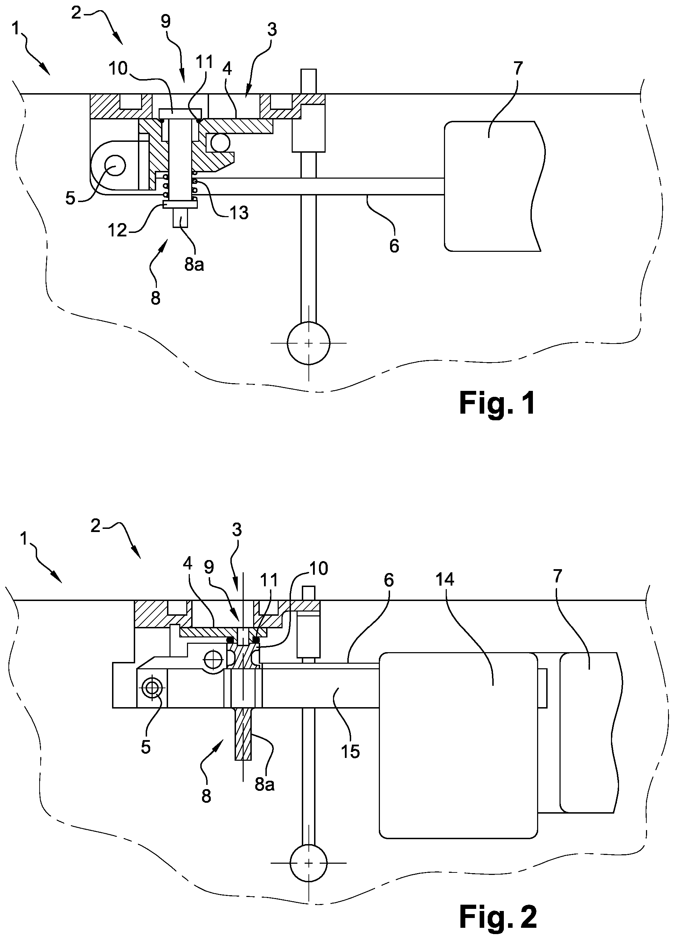

Plus précisément, selon un premier mode de réalisation ne faisant pas partie de l'invention, illustré à la figure 1, la tige de soupape (8a) est montée coulissante dans un orifice (9), en communication avec l'extérieur, ménagé dans ledit clapet (4). La tige de soupape (8a) est apte à coulisser entre une position d'ouverture et une position de fermeture de l'orifice (9). La tige de soupape (8a) comprend une extrémité supérieure formant un épaulement supérieur (10) destiné à faire office de butée pour la position de fermeture de ladite tige de soupape (8a). Cet épaulement supérieur (10) comprend avantageusement un joint torique (11) pour l'étanchéité de la tige de soupape (8a) en position fermée. La tige de soupape (8a) comprend une extrémité inférieure comprenant un épaulement inférieur (12) formant un siège pour un ressort de compression (13), agencé autour de la tige de soupape (8a), d'une part en appui contre ledit épaulement inférieur (13) et, d'autre part en appui contre le clapet (4). Le ressort de compression (13) maintient la soupape (8) en position fermée. La soupape (8) est apte à adopter la position ouverte, poussée par la force exercée par la pression interne du réservoir (1), à l'encontre dudit ressort de compression (13).

En effet, lorsque la pression augmente à l'intérieur du réservoir (1), par exemple lorsqu'un système d'inertage injecte du gaz inerte dans le réservoir (1) alors que le clapet (4) est en position fermée par l'action du carburant sur le flotteur (7) du fait du tangage ou du roulis de l'aéronef par exemple. L'injection de ce gaz entraine une augmentation de la pression interne, et la force exercée par cette pression interne maintient le clapet (4) en position fermée, même lorsque le carburant n'agit plus sur le flotteur (7) dudit clapet (4).

Ainsi, , la pression interne exerce aussi une force sur la tige de soupape (8a) et tend à lui faire adopter la position d'ouverture. Ainsi, lorsque la force exercée par la pression interne du réservoir (1) sur la tige de soupape (8a) dépasse la somme des forces qui maintiennent la tige de soupape (8a) en position fermée, à savoir celles exercées par la pression atmosphérique et par le ressort de compression (13), la soupape (8) est poussée en position ouverte, à l'encontre dudit ressort de compression (13), et assure une mise à l'air du réservoir (1) de carburant.

De cette manière, il apparait que lorsque la pression interne du réservoir (1) atteint un certain seuil, la soupape (8) est ouverte et la mise à l'air est assurée, d'une manière sécurisée.

C'est le ressort de compression (13) qui détermine bien entendu la pression à laquelle doit s'ouvrir la soupape (8). En effet, le ressort (13) est dimensionné pour exercer une force de maintien de la soupape (8) en position fermée égale à celle exercée par la différence entre une première pression interne seuil et la pression atmosphérique. Ainsi, il est possible de dimensionner le ressort (13) pour autoriser l'ouverture de la soupape (8), lorsque le clapet (4) est en position fermée et que le niveau de carburant est en dessous du seuil défini, à partir d'une certaine pression interne seuil désirée. Bien entendu, l'Homme du Métier saura dimensionner ce ressort (13) en fonction de la pression interne seuil désirée.

De ce qui précède, lorsque le réservoir (1) comprend une pression interne supérieure à la pression interne seuil, la soupape (8) est poussée en position ouverte, à l'encontre du ressort (13), par la force exercée par la pression interne, et assure une mise à l'air du réservoir (1) de carburant.

Selon un second mode de réalisation de l'invention illustré à la figure 2, le fonctionnement du clapet (4) et du flotteur (7) reste le même, cependant la tige de soupape (8a) est pilotée par un deuxième flotteur (14). En effet, dans ce mode de réalisation, la tige de soupape (8a) n'est pas montée coulissante à l'intérieur de l'orifice (9) du clapet (4), mais est montée de manière pivotante par rapport au clapet (4) autour de l'axe (5) pour adopter une position fermée dans laquelle l'épaulement supérieur (10) vient obturer l'orifice (9), et une position ouverte de mise à l'air dans laquelle ladite tige de soupape (8a) libère ledit orifice (9).

Plus précisément, la tige de soupape (8a) est fixée perpendiculairement sur un second bras (15) prolongé à une extrémité par le deuxième flotteur (14) et fixé, de manière pivotante autour de l'axe (5), à une autre extrémité au clapet (4). Ainsi, la tige de soupape (8a) est apte à adopter la position ouverte, entrainée en rotation par le poids du deuxième flotteur (14), et la position fermée, poussée par le deuxième flotteur lorsque le niveau de carburant dans le réservoir (1) atteint un certain seuil.

Ainsi, lorsque le clapet (4) est maintenu de manière non désirée en position fermée par la pression interne, et que le niveau de carburant est en dessous du seuil, le poids du deuxième flotteur (14) augmenté par l'effet bras de levier du bras (15) entraine l'ouverture de la soupape (8), tant que la force exercée par la pression interne sur la soupape (8) est inférieure à la somme des forces qui tendent à passer la soupape (8) en position ouverte, à savoir celles exercées par la pression atmosphérique et par le poids du deuxième flotteur (14).

La pression interne qui exerce une force sur la soupape (8) égale à la somme des forces qui tendent à passer la soupape (8) en position ouverte, correspond à la pression interne seuil.

De cette manière, dans le cas où le clapet (4) est maintenu en position de fermeture de manière non désirée, la mise à l'air est assurée sur une plage de pression, jusqu'à ce que la pression interne dépasse la pression interne seuil.

C'est bien entendu le poids du deuxième flotteur (14) qui détermine la pression interne seuil à laquelle la soupape (8) est passée en position fermée. En effet, le deuxième flotteur (14) et la longueur de son bras sont dimensionnés pour exercer une force tendant à ouvrir la soupape (8), supérieure à celle correspondant à la différence entre les forces exercées sur la soupape (8) par la pression interne seuil et la pression atmosphérique. Ainsi, il est possible de dimensionner le deuxième flotteur (14) et son bras (15) de levier pour autoriser l'ouverture de la soupape (8), lorsque le clapet (4) est en position fermée et que le niveau de carburant est en dessous du seuil défini, jusqu'à une certaine pression interne seuil désirée. Bien entendu, l'Homme du Métier saur dimensionner ce deuxième flotteur (14) et son bras (15) de levier en fonction de la pression interne seuil désirée.

Il ressort de ce qui précède que l'invention fournit un réservoir de carburant capable d'assurer une mise à l'air en toute circonstance et de manière sécurisée, afin d'éviter toute surpression à l'intérieur dudit réservoir.

## Revendications

1. Réservoir (1) de carburant comprenant un système de mise à l'air (2) comprenant un clapet (4) de fermeture d'une ouverture (3) ménagée dans le réservoir (1) et assurant une communication avec l'extérieur dudit réservoir (1) à la pression atmosphérique, ledit clapet (4) est assujetti à un flotteur (7) et est monté de manière articulée dans le réservoir (1) de sorte à adopter une position fermée, en étant poussé par le flotteur (7) lorsque le niveau de carburant dans le réservoir (1) atteint un certain seuil, et une position ouverte de mise à l'air, en étant entrainé par le flotteur (7) lorsque le niveau de carburant est en dessous dudit seuil, ***caractérisé* en ce que** le clapet (4) comprend une soupape (8) assujettie à un deuxième flotteur (14) monté de manière articulée dans le réservoir (1) de sorte que ladite soupape (8) adopte une position fermée, en étant poussée par le deuxième flotteur (14) lorsque le niveau de carburant dans le réservoir (1) atteint un certain seuil, et une position ouverte de mise à l'air afin d'éviter une surpression à l'intérieur dudit réservoir, en étant entrainée par le deuxième flotteur (14) lorsque le niveau de carburant est en dessous dudit seuil et que la force exercée par la pression interne sur la soupape (8) est inférieure à la somme des forces exercées sur la soupape (8) par la pression atmosphérique et par le poids du deuxième flotteur (14).

2. Réservoir (1) selon la revendication 1, ***caractérisé* en ce que** le deuxième flotteur (14) est assujetti à la soupape (8) par l'intermédiaire d'un bras (15) formant un bras de levier pour augmenter la force exercée par le deuxième flotteur (14) sur la soupape (8).

## Patentansprüche

1. Kraftstofftank (1) mit einer Entlüftungsanlage (2), die ein Klappenventil (4) zum Schließen einer im Tank (1) ausgebildeten Öffnung (3) umfasst und eine Verbindung mit der Außenseite des Tanks unter atmosphärischem Druck (1) herstellt,
wobei das Klappenventil (4) an einen Schwimmer (7) gebunden und im Tank (1) gelenkig angebracht ist, so dass es durch eine Schubbewegung des Schwimmers (7) eine geschlossene Stellung einnimmt, wenn der Kraftstoffstand im Tank (1) einen bestimmten Schwellenwert erreicht, und durch eine Antriebsbewegung des Schwimmers (7) eine offene Entlüftungsstellung einnimmt, wenn der Kraftstoffstand unter diesem Schwellenwert liegt, **dadurch *gekennzeichnet,* dass** das Klappenventil (4) ein Ventil (8) umfasst, das an einen zweiten Schwimmer (14) gebunden ist, der im Tank (1) gelenkig angebracht ist, so dass das Ventil (8) durch eine Schubbewegung des zweiten Schwimmers (14) eine geschlossene Stellung einnimmt, wenn der Kraftstoffstand im Tank (1) einen bestimmten Schwellenwert erreicht, und durch eine Antriebsbewegung des zweiten Schwimmers (14) eine offene Entlüftungsstellung einnimmt, um einen Überdruck im Inneren des Tanks zu vermeiden, wenn der Kraftstoffstand unter diesem Schwellenwert liegt und die durch den Innendruck auf das Ventil (8) ausgeübte Kraft geringer ist als die Summe der Kräfte, die durch den atmosphärischen Druck und durch das Gewicht des zweiten Schwimmers (14) auf das Ventil (8) ausgeübt werden.

2. Tank (1) nach Anspruch 1, **dadurch *gekennzeichnet,* dass** der zweite Schwimmer (14) an das Ventil (8) über einen Arm (15) gebunden ist, der einen Hebelarm bildet, um die von dem zweiten Schwimmer (14) auf das Ventil (8) ausgeübte Kraft zu erhöhen.

## Claims

1. Fuel tank (1) comprising a venting system (2) comprising a flap (4) for closing and opening (3) made in the tank (1) and providing communication with the outside of said tank (1) at atmospheric pressure, said flap (4) being subjected to a float (7) and is mounted in a hinged manner in the tank (1) so as to adopt a closed position, being pushed by the float (7) when the level of fuel in the tank (1) reaches a certain threshold, and an open venting position, being driven by the float (7) when the level of fuel is below said threshold, ***characterized* in that** the flap (4) comprises a valve (8) subjected to a second float (14) mounted in a hinged manner in the tank (1) so that said valve (8) adopts a closed position, being pushed by the second float (14) when the level of fuel in the tank (1) reaches a certain threshold, and an open venting position in order to prevent overpressure within said tank, being driven by the second float (14) when the level of fuel is below said threshold and the force exerted by the internal pressure on the valve (8) is less than the sum of the forces exerted on the valve (8) by the atmospheric pressure and by the weight of the second float (14).

2. Tank (1) according to claim 1, ***characterized* in that** the second float (14) is subjected to the valve (8) by means of an arm (15) forming a lever in order to increase the force exerted by the second float (14) on the valve (8).
